# EUROPEAN PATENT APPLICATION

(11) **EP 4 240 002 A1**
(43) Date of publication of application: **06.09.2023**
(21) Application number: 21892192.2
(22) Date of filing: 27.10.2021
(51) Int. Cl.: H04N 5/232, H04N 5/225, H04M 1/02

(54) **APPARATUS FOR PROVIDING PREVIEW IMAGE, AND METHOD THEREFOR**

(30) Priority: 12.11.2020 KR 20200151344; 13.01.2021 KR 20210004840
(71) Applicant: Samsung Electronics Co., Ltd., Suwon-si, Gyeonggi-do 16677 (KR)
(72) Inventor: KIM, Jongdoo, Suwon-si Gyeonggi-do 16677 (KR); KIM, Sanguk, Suwon-si Gyeonggi-do 16677 (KR); NA, Hyoseok, Suwon-si Gyeonggi-do 16677 (KR); PARK, Daeseung, Suwon-si Gyeonggi-do 16677 (KR); JU, Wanjae, Suwon-si Gyeonggi-do 16677 (KR)
(74) Representative: Nederlandsch Octrooibureau
(86) International application number: PCT/KR2021/015180
(87) International publication number: WO 2022/103022

(57) **Abstract**

A method for providing a preview image, and an electronic device for supporting same are disclosed. The electronic device can include a housing, a camera, a display, at least one processor, and a memory. If the extension of the display from the housing is detected, the at least one processor can identify the distance between the center position of the extended display and the camera, acquire a first image including a viewing area of the camera, correct the first image on the basis of the identified distance to acquire a second image, and display a preview image on the display on the basis of the second image. Other various embodiments identified through the present document are possible.

## Description

### [Technical Field]

Various embodiments disclosed herein relate to a technology for providing a preview image by an electronic device having a flexible display.

### [Background Art]

Recently, the use of flexible-type electronic devices capable of changing the physical shape of a display area is increasing. For example, for a foldable, rollable, or slidable electronic device, a structure capable of expanding or reducing a display area is employed, thereby expanding the size of the display area as needed to provide a wide screen while maintaining portability.

In general, when photographing a subject by using an electronic device, a user tends to place the subject in the center of a display of the electronic device. When the size of a display area of a flexible-type electronic device is changed (e.g., expanded or reduced), the distance between a camera provided in the electronic device and the central part of the display may also be changed. As a result, the user may obtain an unnatural image in which a subject is out of the central part of the display.

### [Disclosure of Invention]

### [Technical Problem]

When the size of a display area of a flexible-type electronic device is expanded, a camera of the electronic device may move away from the central part of the expanded display area. Similarly, when the size of the display area is reduced, the camera may come closer to the central part of the reduced display area. Accordingly, a user may feel inconvenience when photographing a subject in a state in which the size of the display area is changed because the user has to fix the position of the electronic device, based on the camera rather than the display area in order to obtain an image with a desired composition.

Accordingly, various embodiments herein may provide a preview image which is processed such that a subject is photographed to be in the central part of a display area even after the size of the display area is changed when the subject is photographed using a flexible-type electronic device.

The technical problems to be solved by the embodiments disclosed herein are not limited to the technical problems mentioned above, and other unmentioned technical problems will be clearly understood by those of ordinary skill in the art to which the disclosure belongs from the following description.

### [Solution to Problem]

An electronic device according to an embodiment disclosed herein may include a housing, a camera disposed in the housing, a display accommodatable in the housing, at least one processor operatively connected to the camera and the display, and a memory operatively connected to the at least one processor, wherein the memory stores instructions that, when executed, cause the at least one processor to, in response to detecting that the display is expanded from the housing, identify the distance between the central part of the expanded display and the camera, obtain a first image including a view area of the camera, obtain a second image obtained by correcting the first image, based on the identified distance, and display a preview image on the display, based on the second image.

A method for operating an electronic device according to an embodiment disclosed herein may include, in response to detecting that a display of the electronic device is expanded from the housing, identifying the distance between a central location of the expanded display and a camera disposed in the housing, obtaining a first image including a view area of the camera, obtaining a second image obtained by correcting the first image, based on the identified distance, and displaying a preview image on the display, based on the second image.

### [Advantageous Effects of Invention]

Various embodiments disclosed herein may provide a preview image corrected using the distance between a camera provided in a flexible-type electronic device and the central part of a display area having a changed (e.g., expanded or reduced) size, thereby obtaining an image intended by a user even when a subject is photographed to be fitted to the central part of the display area. In addition, a preview image which is natural based on the central part of the display area may be provided regardless of a change in the size of the display area, thereby improving user convenience during photographing.

In addition, various effects that are identified directly or indirectly through this document may be provided.

### [Brief Description of Drawings]

FIG. 1 is a block diagram of an electronic device in a network environment according to an embodiment.
FIGS. 2A and 2B illustrate a structure of a flexible-type electronic device according to an embodiment.
FIG. 3 illustrates captured images provided according to a deformed state of a display according to an embodiment.
FIG. 4 illustrates a configuration of an electronic device according to an embodiment.
FIG. 5 illustrates a detailed configuration of an electronic device according to an embodiment.
FIG. 6 illustrates a camera view area according to a deformed state of a display according to an embodiment.
FIG. 7 illustrates a method for providing a preview image according to a deformed state of a display according to an embodiment.
FIG. 8 illustrates a reference pixel area according to a deformed state of a display according to an embodiment.
FIG. 9 is a flowchart illustrating a method for operating an electronic device according to an embodiment.
FIG. 10 is a flowchart illustrating a method for operating an electronic device according to an embodiment.

In connection with the description of the drawings, the same or similar reference numerals may be used for the same or similar elements.

### [Mode for Carrying out the Invention]

Hereinafter, various embodiments disclosed herein will be described with reference to the accompanying drawings. This is not intended to limit the various embodiments of the disclosure to a specific form, but should be understood to include various modifications, equivalents, and/or alternatives of the disclosure.

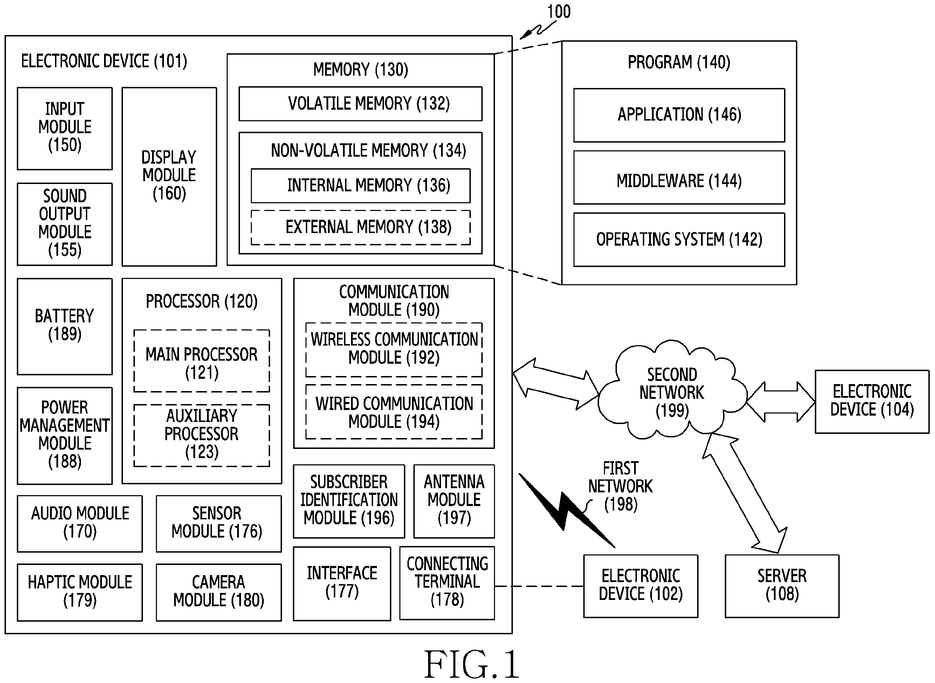

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120 and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input module 150 may receive a command or data to be used by other components (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150 or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (LTL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function, the service requested, an additional function, or an additional service related to the request, and transfer an outcome of the performance to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

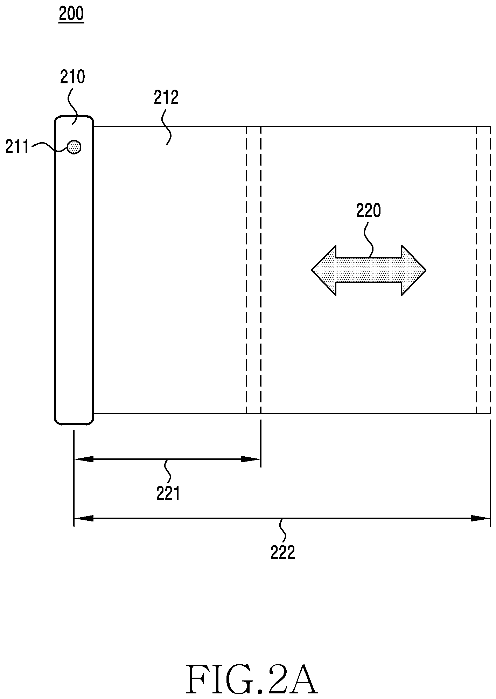

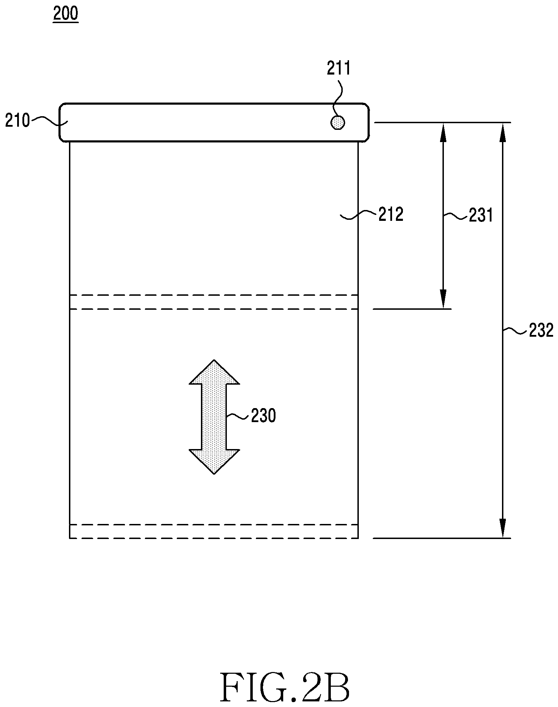

FIGS. 2A and 2B illustrate a structure of a flexible-type electronic device 200 according to an embodiment.

Referring to FIGS. 2A and 2, the flexible-type electronic device 200 may include a housing 210 and a display 212 (e.g., the display module 160 in FIG. 1) having variable size. The housing 210 may include modules required to provide various functions, including a camera 211 (e.g., the camera module 180 in FIG. 1). For example, the housing 210 may further include at least one processor (e.g., the processor 120 in FIG. 1), a memory (e.g., the memory 130 in FIG. 1), at least one sensor (e.g., the sensor module 176 in FIG. 1), a battery (e.g., the battery 189 in FIG. 1), or a communication circuit (e.g., the communication module 190 in FIG. 1). According to various embodiments, at least a part of the display 212 may be accommodated inside the housing 210. The housing 210 may be implemented in a cylindrical shape to accommodate various modules and at least a part of the display 212. However, the shape of the housing 210 is not necessarily limited to a cylindrical shape and may be in various shapes capable of mounting the camera 211, the display 212, and other modules necessary to provide the functions of the electronic device 200.

According to various embodiments, the display 212 is a flexible display having variable size of a display area exposed to the outside (or visible from the front of the electronic device) (e.g., expanded or reduced), and may be a rollable display or a slidable display. The size of the display area may vary according to a deformed state (e.g., a sliding state, a rolling state, an expanded state, a reduced state, a fully expanded state, a fully reduced state, and an intermediate state) of the display 212. For example, the display 212 may be expanded or reduced according to a user's input (e.g., a roll-in/roll-out input according to a rolling motion, a slide-in/slide-out input according to a sliding motion). The electronic device 100 may include a sliding structure or a rolling structure for changing the size of the display area.

According to various embodiments, the display 212 may be slid or rolled in at least one direction (e.g., a horizontal direction or a vertical direction). The size of the display area exposed to the outside of the electronic device 200 may vary by a sliding or rolling operation of the display 212. For example, the display 212 may be slid or rolled in the horizontal direction 220 as shown in FIG. 2A. When at least a part of the display 212 is drawn out in the horizontal direction 220 by a user's input while being accommodated in the housing 210, the horizontal size of the display area may vary between a basic area 221 and a fully expanded area 222. In an embodiment, the display 212 may be slid out in a first direction (e.g., the right direction of the horizontal direction 220) with respect to a single axis and may be slid in in a second direction opposite to the first direction (e.g., the left direction of the horizontal direction 220). The size of the display area may be expanded by the sliding-out operation, and the size of the display area may be reduced by the sliding-in operation. In an embodiment, the display 212 may be slid out in both expansion directions (e.g., the horizontal direction in which the left side and right side become farther apart from each other) with respect to multiple axes or simultaneously slid in in the opposite directions thereof (e.g., the horizontal direction in which the left side and right side become closer to each other). The size of the display area may be expanded by the bi-directional sliding-out operation, and the size of the display area may be reduced by the bi-directional sliding-in operation.

For another example, the display 212 may be slid or rolled in a vertical direction 230 as shown in FIG. 2B. When at least a part of the display 212 is drawn out in the vertical direction 230 by a user's input while being accommodated in the housing 210, the vertical size of the display area may vary between a basic area 231 and a fully expanded area 232. In an embodiment, the display 212 may be slid out in a third direction (e.g., the lower direction of the vertical direction 230) with respect to a single axis and may be slid in in a fourth direction opposite to the third direction (e.g., the upper direction of the vertical direction 230). The size of the display area may be expanded by the sliding-out operation, and the size of the display area may be reduced by the sliding-in operation. In an embodiment, the display 212 may be slid out in both expansion directions (e.g., the vertical direction in which the upper side and lower side become farther apart from each other) with respect to multiple axes or simultaneously slid in in opposite directions thereof (e.g., the vertical direction in which the upper side and lower side become closer to each other). The size of the display area may be expanded by the bi-directional sliding-out operation, and the size of the display area may be reduced by the bi-directional sliding-in operation.

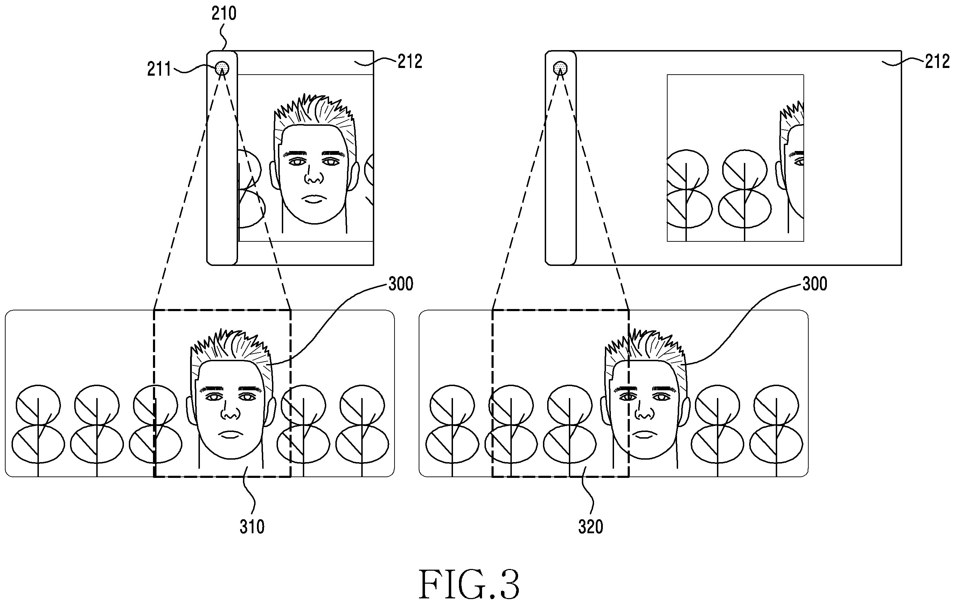

FIG. 3 illustrates a captured image provided according to a deformed state of a display according to an embodiment.

FIG. 3 shows a method for obtaining a captured image according to a deformed state (e.g., a sliding state, a rolling state, an expanded state, a reduced state, a fully expanded state, a fully reduced state, and an intermediate state) of the display 212 included in the flexible-type electronic device 200 in FIG. 2.

According to various embodiments of the disclosure, when photographing the subject 300 by using the electronic device 200, a user may obtain an image captured in a state in which the subject 300 is positioned at the center of the display 212 and the posture thereof is fixed. Since the size of the display area exposed to the outside of the electronic device 200 varies according to the deformed state of the display 212, the distance between the camera 211 disposed on the housing 210 and the central part of the display area may also vary. As shown on the left side of FIG. 3, when only a part of the display 212 is exposed due to the at least a part of the display 212 accommodated inside the housing 210, the distance between the camera 211 and the central part of the display area may become relatively close. Therefore, an image 310 in which the subject 300 is in the center thereof may be obtained even when the subject 300 is photographed to be fitted to the center of the display 212.

According to various embodiments, when the display 212 of the electronic device 200 is drawn out from the housing 210, the size of the display area exposed to the outside of the electronic device 200 may be expanded. As shown in the right side of FIG. 3, when the size of the display area is expanded, the distance between the camera 211 and the central part of the display area may become farther than before the display 212 is expanded. In this case, when the user photographs the subject 300 to fit to the central part of the display 212, the user may obtain the image 320 in which the subject 300 is out of the center thereof. When the user photographs the subject 300 to fit to a view area of the camera 211, the user may feel inconvenience in the process of photographing the subject 300 and checking a preview image provided through the display 212 because the subject 300 is away from the center of the display 212. Therefore, the subject 300 needs to be photographed to be fitted to the central part of the display 212 regardless of a deformed state of the display 212.

FIG. 3 shows an embodiment in which the display 212 is slid or rolled horizontally in the right direction and thus the size of the display area is expanded, but according to various embodiments, the display area may be implemented to be expanded horizontally in the left direction. According to various embodiments, the display 212 may be slid or rolled vertically in the upper or lower direction to expand the size of the display area.

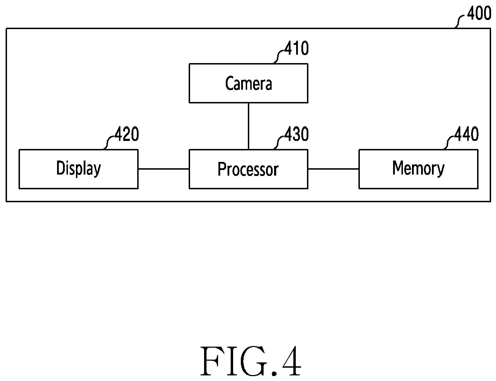

FIG. 4 illustrates a configuration of an electronic device 400 according to an embodiment.

Referring to FIG. 4, the electronic device 400 is a flexible-type device having a variable size of the display area exposed to the outside, and may include a housing (not shown), a camera 410, a display 420, a processor 430, or memory 440. In FIG. 4, the electronic device 400 may correspond to the electronic device 101 shown in FIG. 1, or the flexible-type electronic device 200 shown in FIGS. 2A and 2B.

In an embodiment, the camera 410 (e.g., the camera module 180 in FIG. 1 or the camera 210 in FIG. 2A) may be disposed in the housing of the electronic device 400 and may photograph a subject according to a user's manipulation. According to various embodiments, the electronic device 400 may include one or more cameras having different field of view.

In an embodiment, the display 420 is an output means having a variable size (e.g., expansion or reduction) of the display area exposed to the outside of the electronic device 400 and may display an image of a subject photographed by the camera 410. According to various embodiments, the display area size of the display 420 may be changed (e.g., expanded or reduced) according to sliding or rolling operation. For example, the size of the display area may be expanded when a partial area of the display 420 are drawn out from the housing by sliding-out operation or rolling-out operation while being accommodated inside the housing (e.g., slide-in state or roll-in state in which the partial area is drawn into the housing). When the partial area drawn out of the housing is drawn into the housing by sliding-in operation or rolling-in operation, the size of the display area may be reduced.

In an embodiment, the memory 440 (e.g., the memory 130 in FIG. 1) may store instructions that, when executed, cause the at least one processor 430 (e.g., the processor 120 in FIG. 1) to perform various operations. For example, the at least one processor 430 may perform operations of correcting a preview image provided through the camera 410 such that the subject is photographed to be fitted to the center of the display 420 regardless of a deformed state of the display 420.

In an embodiment, when at least one processor 430 detects the expansion of the display 420 from the housing, the distance between the central location of the expanded display 420 and the camera 410 may be identified. For example, the central location may be at least one of the horizontal central location or vertical central location of the expanded display 420. When the display 420 is expanded in the horizontal direction from the housing, the at least one processor 430 may identify the horizontal distance between the camera 410 and the horizontal center of the expanded display 420. When the display 420 is expanded in the vertical direction from the housing, the at least one processor 430 may identify the vertical distance between the camera 410 and the vertical center of the expanded display 420. According to various embodiments, at least one processor 430 may pre-calculate and store the distance between the camera 410 and the central location of the display 420, which is variable according to the expansion rate of the display 420. The stored distance may be referred to when taking photographs. For example, it may be assumed that a maximum expansion rate of a state in which the display area of the display 420 is fully expanded is 100%. In this case, if the distance is 10 when the expansion rate of the display 420 is 100%, the distance may be calculated as 5 when the expansion rate of the display 420 is 50%, and the distance may be calculated as 7.5 when the expansion rate of the display 420 is 75%.

In an embodiment, the at least one processor 430 may obtain a first image including the view area of the camera 410. For example, the view area is an area seen by the camera 410 disposed in the housing and may be determined based on at least one of the field of view (FOV) of the camera 410 or the distance between the camera 410 and a subject. The first image may refer to an image corresponding to the view area obtained from the camera 410.

In an embodiment, the at least one processor 430 may obtain a second image obtained by correcting the first image by using the distance between the camera 410 and the central location of the expanded display 420. For example, when the display 420 is expanded in the horizontal direction, the at least one processor 430 may produce a second image by cutting pixels of a first area excluding an area corresponding to the horizontal distance between the camera 410 and the horizontal central location of the expanded display 420 from the first image. For another example, when the display 420 is expanded in the vertical direction, the at least one processor 430 may produce a second image by cutting pixels of a second area excluding an area corresponding to the vertical distance between the camera 410 and the vertical central location of the expanded display 420 from the first image.

According to various embodiments, the first area and second area may be determined based on the direction of the camera 410 moving when the display 420 is expanded. When the camera 410 moves horizontally in the left direction, based on a subject while the display 420 is expanded in the horizontal direction, the at least one processor 430 may determine the remaining area excluding the right-side area corresponding to the horizontal distance from the first image as the first area. When the camera 410 moves vertically in the upper direction, based on a subject while the display 420 is expanded vertically in the direction, the at least one processor 430 may determine the remaining area excluding the upper area corresponding to the vertical distance from the first image as the second area.

According to various embodiments, at least one processor 430 may pre-calculate data on a reference pixel area according to an expansion rate of the display 420 to store the data as a lookup table so as to refer to the lookup table when providing a preview image. The reference pixel area may correspond to the first area. For example, if the 200x200 (pixel) of the first image is calculated as the reference pixel area when the maximum expansion rate of the display 420 is 100% (i.e., when the display area is fully expanded), the reference pixel area may be calculated as 100x100 (pixel) when the expansion rate of the display 420 is 50%, and the reference pixel area may be calculated as 150x150 (pixel) when the expansion rate of the display 420 is 75%. At least one processor 430 may shorten the time required to provide preview images by using a reference pixel area of a prestored lookup table without calculating the first area whenever providing a preview image.

In an embodiment, the at least one processor 430 may display a preview image on the display 420, based on the second image. According to various embodiments, at least one processor 430 may shift the second image, based on the central location of the expanded display 420. For example, when the display 420 is expanded in the horizontal direction, the at least one processor 430 may shift the second image such that the horizontal center of the second image is positioned based on the horizontal central location of the expanded display 420. For another example, when the display 420 is expanded in the vertical direction, the at least one processor 430 may shift the second image such that the vertical center of the second image is positioned based on the vertical central location of the expanded display 420. According to various embodiments, the at least one processor 430 may enlarge the shifted second image to a ratio corresponding to the size of the expanded display 420 to provide the same as a preview image.

According to various embodiments, at least one processor 430 may provide the preview image by using a plurality of cameras having different field of view. For example, when the display 420 is expanded to the maximum expansion rate, the at least one processor 430 may select a camera having the largest field of view among the plurality of cameras and provide the preview image by using the selected camera. In this process, at least one processor 430 may select at least one of the plurality of cameras by using the reference pixel area of the look up table.

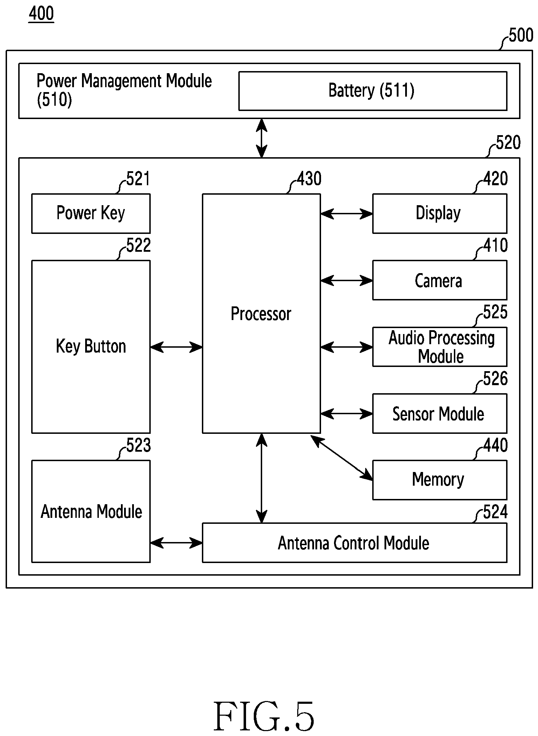

FIG. 5 illustrates a detailed configuration of the electronic device 400 according to an embodiment.

Referring to FIG. 5, the electronic device 400 may further include one or more modules configured to support various functions, in addition to the camera 410, the display 420, the at least one processor 430, and the memory 440. For example, the one or more modules may include a power part 510 associated with power supply and control of the electronic device 400 or a control part 520 configured to control various functions/operation of the electronic device 400 and may be mounted on the housing 500 of the electronic device 400 with the components in FIG. 4. FIG. 5 may be understood as illustrating the extended configuration of the electronic device 400 in FIG. 4.

According to various embodiments, the power part 510 may include a power management module 511 and a battery 512. The power management module 511 may manage the power supplied to the electronic device 400. Some or all of the description of the power management module 188 in FIG. 1 may be applied to the power management module 511. The battery 512 may supply power to at least one component of the electronic device 400. Some or all of the description of the battery 189 in FIG. 1 may be applied to the battery 512.

According to various embodiments, the control part 520 may include at least one of a camera 410, a display 420, at least one processor 430, a memory 440, a power key 521, one or more key buttons 522, an antenna 523, an antenna control module 524, an audio module 525, or a sensor module 526. The camera 410, the display 420, at least one processor 430, and the memory 440 among the components included in the control part 520 may be understood as the same as the components shown in FIG. 4.

In an embodiment, the power key 521 capable of turning on/off the power of the electronic device 400 may be disposed on the side surface of the housing 500. The electronic device 400 may further include one or more key buttons 522 configured to control various functions. The one or more key buttons 522 may include at least one of a volume up/down key configured to adjust the audio output volume level of the electronic device 400, a camera control key configured to control the photographing function of the camera 410, a home key configured to display the previous screen on the display 420 or display the currently running application, a menu key configured to display the configuration menu on the display 420, or a fingerprint key configured to recognize user fingerprint. According to various embodiments, the one or more key buttons 522 may be in the form of a physical button disposed on the side surface of the housing 500 or may be in the form of a touch key displayed on the display 420.

In an embodiment, the antenna module 523 may transmit signals or power to the outside or receive signals or power from the outside. For example, the antenna module 523 may include at least one of a radio frequency antenna, a near field communication (NFC) antenna, magnetic secure transmission (MST) antenna, or an ultra-wideband (UWB) antenna to support various communication methods. The antenna control module 524 may control a transmission and reception function of the antenna module 523. Some or all of the description of the antenna module 197 in FIG. 1 may be appropriately applied to the antenna module 523 and the antenna control module 524.

In an embodiment, the audio processing module 525 may perform a processing for input and output of the audio signal. For example, the audio processing module 525 may convert the sound obtained from the outside into an electrical audio signal through a microphone or enable the electrical audio signal to be output as sound through the speaker. Some or all of the description of the audio output module 155 and the audio module 170 in FIG. 1 may be applied to the audio processing module 525.

In an embodiment, the sensor module 526 may detect the environmental state around the electronic device 400 or a user's operating state to generate the same as an electrical signal. Some or all of the description of the sensor module 176 in FIG. 1 may be applied to the sensor module 526.

According to various embodiments, the electronic device 400 may further include components corresponding to functions required by the electronic device 400 among the components shown in FIG. 1, in addition to the components shown in FIG. 5.

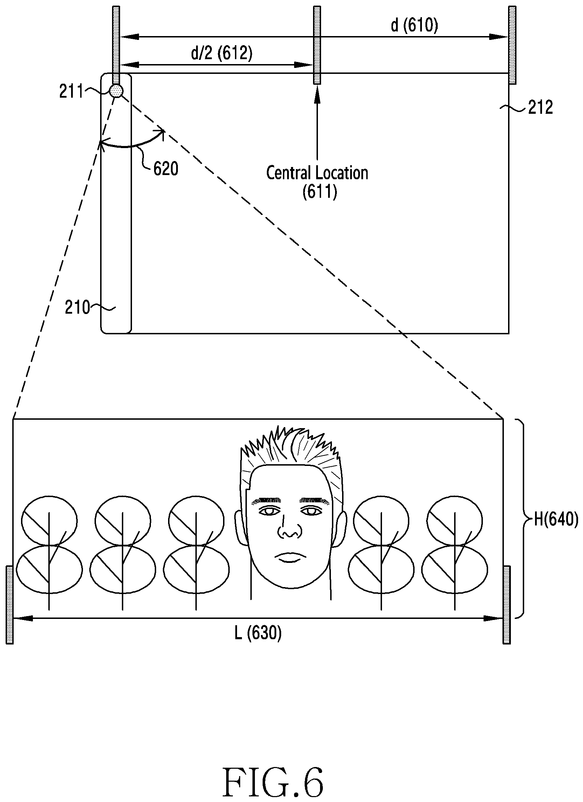

FIG. 6 illustrates a camera view area according to a deformed state of the display 212 according to an embodiment.

Referring to FIG. 6, the display 212 may be drawn out in the horizontal direction of the housing 210, thereby expanding the size of the display area. When the distance from the camera 211 disposed in the housing 210 to the end of the expanded display 212 is referred to as d 610, the distance between the camera 211 and the horizontal central location 611 of the expanded display 212 may be represented by d/2 612.

According to various embodiments, the display 212 may be expanded in the vertical direction of the housing 210. In this case, the distance from the camera 211 to the end of the expanded display 212 may be represented by d, and the distance between the camera 211 and the vertical central location of the expanded display 212 may be represented by d/2.

According to various embodiments, the camera 211 may be moved in the direction opposite to the direction in which the display 212 is drawn out. When taking photographs, the user may recognize the display 212 as a frame of the camera 211 to center a subject, based on the display 212. When a subject is photographed in a state in which the display 212 has been expanded by the user's sliding or rolling operation, the electronic device 200 or 400 may be adjusted such that the subject is positioned in the central part of the expanded display area, and the camera 211 may be moved in the direction opposite to the direction in which the display 212 is drawn out. For example, when the display 212 is drawn out horizontally in the right direction of the housing 210, the camera 211 may be moved horizontally in the left direction. For another example, when the display 212 is drawn out vertically in the lower direction of the housing 210, the camera 211 may be moved vertically in the upper direction.

According to various embodiments, when the display 212 is expanded, the actual horizontal area size of a camera view captured by the camera 211 may be represented by L 630 and the actual vertical area size of the camera view captured by the camera 211 may be represented by H 640. The electronic device 200 or 400 may provide a preview image by correcting the horizontal area or the vertical area from the image including the camera view. For example, when the display 212 is expanded in the horizontal direction, the electronic device 200 or 400 may correct the horizontal area size of the camera view included in the image, and when the display 212 is expanded in the vertical direction, the electronic device 200 or 400 may correct the vertical area size of the camera view included in the image. The camera view may be determined based on at least one of the field of view 620 of the camera 211 or the distance between the camera 211 and a subject. The horizontal area 630 and the vertical area 640 of the camera view may have a constant value regardless of the expansion of the display 212 or the movement of the camera 211.

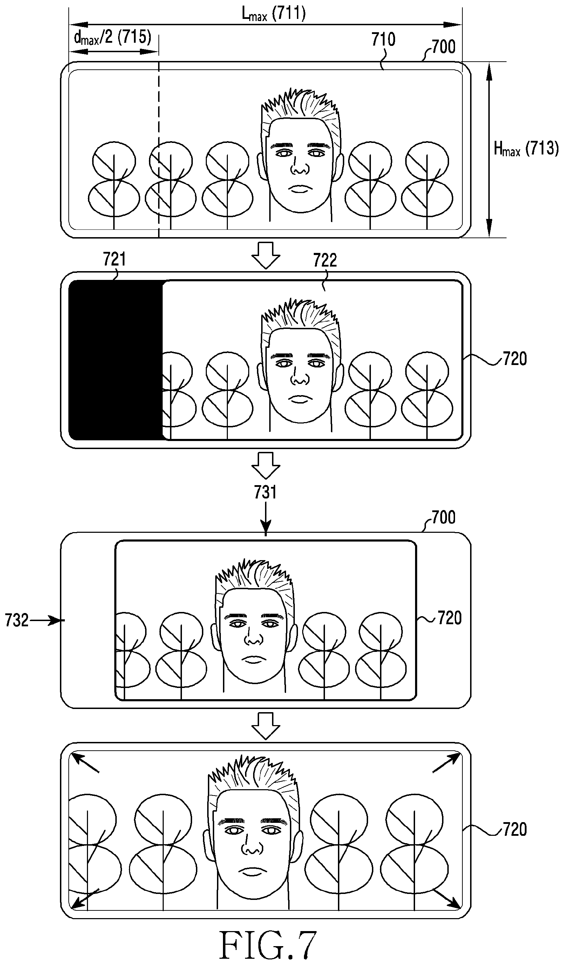

FIG. 7 illustrates a method for providing a preview image according to a deformed state of the display 212 according to an embodiment.

Referring to FIG. 7, the electronic device 200 or 400 may correct a first image corresponding to the camera view to provide the corrected image as a preview image. The first image may be an image including the camera view captured by the camera 211 in a state in which the display 210 is drawn out and thus the display area 700 is fully expanded, as shown in FIG. 6. The correction of the first image shown in FIG. 7 may be performed by at least one processor 430 of the electronic device 200 or 400.

In an embodiment, the electronic device 200 or 400 may obtain a first image 710 corresponding to a camera view. The actual sizes of the horizontal area and the vertical area of a subject seen through the camera view may be represented by the Lₘₐₓ 711 and Hₘₐₓ 713, respectively. The first image 710 may be obtained through photographing by reducing the size of the subject by a certain ratio according to the configuration of the camera 211 or 410. The distance (horizontal or vertical distance) between the camera 211 or 410 and the central location (horizontal central location or vertical central location) of the fully expanded display 212 or 420 may be represented by Dₘₐₓ/2 715.

In an embodiment, the electronic device 200 or 400 may produce a second image 720 by using the remaining area excluding an area corresponding to the distance from the first image 710. For example, when the display 211 or 420 is expanded in the horizontal direction, the electronic device 200 or 400 may obtain the second image 720 by cutting pixels of the first area 722 excluding an area 721 corresponding to the horizontal distance 715 among the pixels constituting the first image. Although FIG. 7 illustrates only a case in which the display 211 or 420 is expanded in the horizontal direction, the second image 720 may be obtained in the same manner even when the display 211 or 420 is expanded in the vertical direction. For another example, when the display 211 or 420 is expanded in the vertical direction, the electronic device 200 or 400 may obtain the second image 720 by cutting pixels of the second area excluding an area corresponding to the vertical distance among the pixels constituting the first image.

In an embodiment, the electronic device 200 or 400 may shift the obtained second images 720 to fit to the central location of the expanded display area 700. For example, when the display 211 or 420 is expanded in the horizontal direction, the electronic device 200 or 400 may shift the second image 720, based on the horizontal central location 731 of the display area 700. For another example, when the display 211 or 420 is expanded in the vertical direction, the electronic device 200 or 400 may shift the second image 720, based on the vertical central location 732 of the display area 700.

In an embodiment, the electronic device 200 or 400 may enlarge the shifted second image 720 to a ratio corresponding to the size of the expanded display area 700 to provide the enlarged image as a preview image. For example, the electronic device 200 or 400 may enlarge the shifted second image 720 to a magnification of 1+dₘₐₓ12 and display the same in the expanded display area 700.

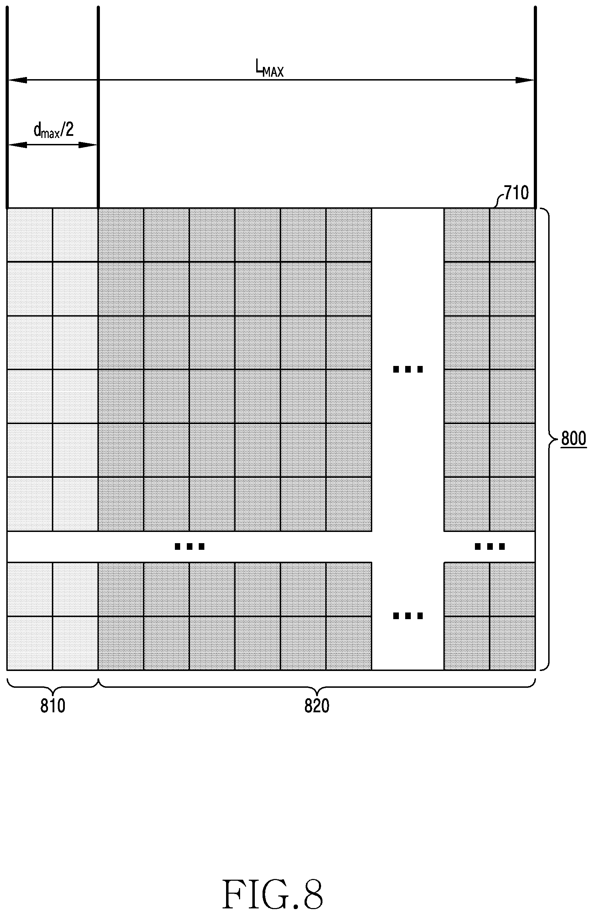

FIG. 8 illustrates a reference pixel area according to a deformed state of a display according to an embodiment.

Referring to FIG. 8, the electronic device 200 or 400 may pre-calculate data on a reference pixel area according to the expansion ratio of display 212 or 420 to store the same as a lookup table. According to various embodiments, the electronic device 200 or 400 may produce a lookup table, based on the images captured by the camera 211 or 410 in a state in which the display 212 or 420 is fully expanded.

For example, the electronic device 200 or 400 may configure, as the entire pixel area 800, an area in the first image 710 shown in FIG. 7, corresponding to the actual horizontal area size (Lₘₐₓ) of the camera view. The electronic device 200 or 400 may configure, as the error pixel area 810, an area in the first image 710, corresponding to the horizontal distance Dₘₐₓ/2 between the camera 211 or 410 and the horizontal central location of the fully expanded display 211 or 410. The electronic device 200 or 400 may identify an area corresponding to the horizontal distance Dₘₐₓ/2 compared with the actual horizontal area size Lₘₐₓ of a subject included in the first image 710 and convert the area into a size corresponding to first image 710, thereby calculating the error pixel area 810. The electronic device 200 or 400 may determine, as a reference pixel area 820, the remaining area excluding the error pixel area 810 from the entire pixel area 800 of the first image 710 and may provide a preview image, based on the reference pixel area 820. FIG. 8 illustrates a method for determining the error pixel area 810 and the reference pixel area 820, based on the horizontal area of the first image 710, but when the display is expanded in the vertical direction, the error pixel area 810 and the reference pixel area 820 may be determined using the same method, based on the vertical area of the first image 710.

According to various embodiments, the electronic device 200 or 400 may calculate a reference pixel area by each expansion size of the display, based on the reference pixel area 820 calculated for the fully expanded display 212 or 420. For example, if 200x200 (pixel) among the entire pixel area corresponding to the first image 710 is calculated as the reference pixel area 820 when the display 212 or 420 is fully expanded (i.e., when the distance from the camera 211 or 410 to the end of the expanded display 212 or 420 is Dₘₐₓ), the reference pixel area by each expansion size of the display may be calculated as shown in [Table 1] by applying a certain ratio, based on the size of the fully expanded display 212 or 420. Referring to [Table 1] below, the reference pixel area may be calculated as 150x150 (pixel) when the expansion ratio of the display 420 is 75% (i.e., when the distance from the camera 211 or 410 to the end of the extended display 212 or 420 is 3dₘₐₓ/4), and the reference pixel area may be calculated as 100x100 (pixel) when the expansion ratio is 50% (when the distance from the camera 211 or 410 to the end of the extended display 212 or 420 is dₘₐₓ/2).

**[Table 1]**

| Length of expanded display | Number of horizontal pixels | Number of vertical pixels |
|---|---|---|
| d(max) | 200 | 200 |
| 3d/4 | 150 | 150 |
| d/2 | 100 | 100 |
| d/4 | 50 | 50 |

According to various embodiments, the electronic device 200 or 400 may shorten the time required to provide preview images by referring to the lookup table as shown in [Table 1] without calculating the first area whenever providing a preview image.

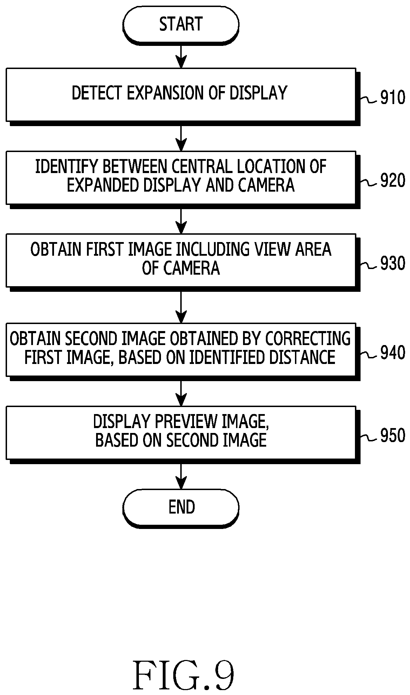

FIG. 9 is a flowchart illustrating a method for operating an electronic device according to an embodiment. According to an embodiment, the electronic device 400 is a flexible-type device having a variable size of a display area exposed to the outside and may correspond to the electronic device 101 shown in FIG. 1 or the flexible-type electronic device 200 shown in FIGS. 2A and 2B. The operations in FIG. 9 may be performed by at least one processor (e.g., the processor 120 in FIG. 1 or at least one processor 430 in FIG. 4) included in the electronic device 201.

Referring to FIG. 9, in operation 910, the electronic device 400 may detect the expansion of the display 420. For example, the electronic device 400 may detect the expansion of the display area when the display 420 is drawn out from the housing, based on the user's input (e.g., a roll-out input according to rolling operation, a slide-out input according to sliding operation). For another example, the electronic device 400 may detect the expansion of the display area when the display 420 is drawn out, by using at least one sensor provided in the electronic device 400.

According to an embodiment, in operation 920, the electronic device 400 may identify the distance between the central location of the expanded display 420 and the camera 410 disposed in the housing. For example, when the display 420 is expanded in the horizontal direction from the housing, the electronic device 400 may identify the horizontal distance between the camera 410 and the horizontal center of the expanded display 420. For another example, when the display 420 is expanded in the vertical direction from the housing, the electronic device 400 may identify the vertical distance between the camera 410 and the vertical center of the expanded display 420.

According to an embodiment, in operation 930, the electronic device 400 may obtain a first image including a view area of the camera 410. According to various embodiments, the view area is an area seen by the camera 410 disposed in the housing and may be determined based on at least one of the field of view (FOV) of the camera 410 or the distance between the camera 410 and a subject.

According to an embodiment, in operation 940, the electronic device 400 may obtain a second image by correcting the first image by using the distance between the camera 410 and the central location of the expanded display 420. For example, when the display 420 is expanded in the horizontal direction, the electronic device 400 may produce the second image by cutting pixels of a first area excluding an area corresponding to the horizontal distance from the first image. For another example, when the display 420 is expanded in the vertical direction, the electronic device 400 may produce the second image by cutting pixels of a second area excluding an area corresponding to the vertical distance from the first image. According to various embodiments, the first area and second area may be determined based on the direction of the camera 410 moving when the display 420 is expanded. When the camera 410 moves horizontally in the left direction, based on a subject while the display 420 is expanded in the horizontal direction, the electronic device 400 may determine the remaining area excluding the right-side area corresponding to the horizontal distance from the first image as the first area. When the camera 410 moves vertically in the upper direction, based on a subject while the display 420 is expanded in the vertical direction, the electronic device 400 may determine the remaining area excluding the upper area corresponding to the vertical distance from the first image as the second area.

According to an embodiment, in operation 950, the electronic device 400 may display a preview image on the display 420, based on the obtained second image. In operation 950, the electronic device 400 may shift the second image according to the central location of the expanded display 420. For example, when the display 420 is expanded in the horizontal direction, the electronic device 400 may shift the second image such that the horizontal center of the second image is positioned based on the horizontal central location of the expanded display 420. For another example, when the display 420 is expanded in the vertical direction, the electronic device 400 may shift the second image such that the vertical center of the second image is positioned based on the vertical central location of the expanded display 420. In operation 950, the electronic device 400 may enlarge the shifted second image to a ratio corresponding to the size of the expanded display 420 to provide the same as a preview image.

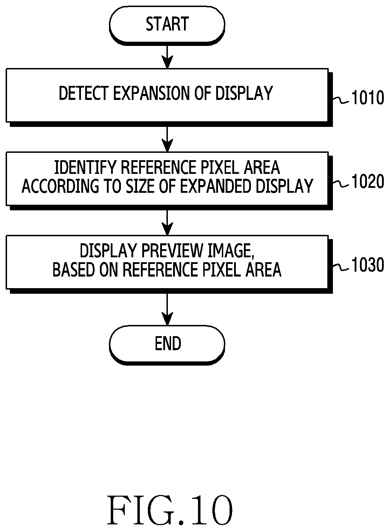

FIG. 10 is a flowchart illustrating a method for operating the electronic device 400 according to an embodiment. According to an embodiment, the electronic device 400 is a flexible-type device having a variable size of a display area exposed to the outside and may correspond to the electronic device 101 shown in FIG. 1 or the flexible-type electronic device 200 shown in FIGS. 2A and 2B. The operations in FIG. 10 may be performed by at least one processor (e.g., the processor 120 in FIG. 1 or at least one processor 430 in FIG. 4) included in the electronic device 201.

According to various embodiments, the electronic device 400 may pre-calculate data on a reference pixel area according to an expansion rate of the display 420 to store the data as a lookup table. For example, the electronic device 400 may produce the lookup table, based on an image captured by the camera 410 in a state in which the display 212 or 420 is fully expanded. The electronic device 400 may determine, as a reference pixel area, the remaining area excluding the error pixel area corresponding to the distance (horizontal distance or vertical distance) between the camera 410 and the central location of the fully expanded display 420 from the entire pixel area corresponding to the image. The electronic device 400 may calculate a reference pixel area by each expansion size of the display, based on the reference pixel area calculated for the fully expanded display 420. For example, if the 200x200 (pixel) of the first image is calculated as the reference pixel area when the maximum expansion rate of the display 420 is 100% (i.e., when the display area is fully expanded), the reference pixel area may be calculated as 100x100 (pixel) when the expansion rate of the display 420 is 50%, and the reference pixel area may be calculated as 150x150 (pixel) when the expansion rate of the display 420 is 75%. According to various embodiments, the electronic device 400 may shorten the time required to provide preview images by using a reference pixel area of a prestored lookup table without calculating the first area whenever providing a preview image.

Referring to FIG. 10, in operation 1010, the electronic device 400 may detect the expansion of the display 420. For example, the electronic device 400 may detect the expansion of the display area when the display 420 is drawn out from the housing, based on the user's input (e.g., a roll-out input according to rolling operation, a slide-out input according to sliding operation). For another example, the electronic device 400 may detect the expansion of the display area when the display 420 is drawn out, by using at least one sensor provided in the electronic device 400.

According to an embodiment, in operation 1020, the electronic device 400 may identify the size of the expanded display 420 in response to the detecting that the display 420 is expanded and may identify the reference pixel area according to the identified expansion size. For example, the electronic device 400 may obtain data on a reference pixel area corresponding to the identified expansion size from the prestored lookup table. In operation 1020, the electronic device 400 may determine the reference pixel area in the first image obtained from the camera 410, based on the data obtained from the lookup table. The first image may be an image including a view area seen by the camera 410 disposed in the housing of the electronic device 400. In operation 1020, the electronic device 400 may determine the reference pixel area in consideration of the direction of the camera 410 moving when the display 420 is expanded. When the camera 410 moves horizontally in the left direction, based on a subject while the display 420 is expanded in the vertical direction, the electronic device 400 may determine the reference pixel area, based on the left horizontal area in the first image. For another example, when the display 420 is expanded in the vertical direction, the electronic device 400 may determine the reference pixel area, based on the lower vertical area in the first image.

According to an embodiment, in operation 1030, the electronic device 400 may display a preview image on the expanded display 420, based on the identified reference pixel area. In operation 1030, the electronic device 400 may obtain a second image corresponding to the reference pixel area from the first image and shift the second image according to the central location of the expanded display 420. For example, when the display 420 is expanded in the horizontal direction, the electronic device 400 may shift the second image such that the horizontal center of the second image is positioned based on the horizontal central location of the expanded display 420. For another example, when the display 420 is expanded in the vertical direction, the electronic device 400 may shift the second image such that the vertical center of the second image is positioned based on the vertical central location of the expanded display 420. In operation 1030, the electronic device 400 may enlarge the shifted second image to a ratio corresponding to the size of the expanded display 420 to provide the same as a preview image.

An electronic device according to an embodiment may include a housing, a camera disposed in the housing, a display accommodatable in the housing, at least one processor operatively connected to the camera and the display, and a memory operatively connected to the at least one processor, wherein the memory may store instructions that, when executed, cause the at least one processor to, in response to detecting that the display is expanded from the housing, identify the distance between the central part of the expanded display and the camera, obtain a first image including a view area of the camera, obtain a second image obtained by correcting the first image, based on the identified distance, and display a preview image on the display, based on the second image.

In an embodiment, the instructions may cause the at least one processor to identify a horizontal distance between the camera and a horizontal central location of the expanded display when horizontal expansion of the display is detected.

In an embodiment, the instructions may cause the at least one processor to obtain the second image including a first area excluding an area corresponding to the identified horizontal distance from the first image, wherein the first area may be determined based on the direction of the camera moving when the display is expanded.

In an embodiment, the instructions may cause the at least one processor to shift the second image, based on the horizontal central location of the expanded display, and enlarge the shifted second image to a ratio corresponding to the size of the expanded display to provide the enlarged image as a preview image.

In an embodiment, the instructions may cause the at least one processor to identify a vertical distance between the camera and a vertical central location of the expanded display when vertical expansion of the display is detected.

In an embodiment, the instructions may cause the at least one processor to obtain the second image including a second area excluding an area corresponding to the identified vertical distance from the first image, wherein the second area may be determined based on the direction of the camera moving when the display is expanded.

In an embodiment, the instructions may cause the at least one processor to shift the second image, based on the vertical central location of the expanded display, and enlarge the shifted second image to a ratio corresponding to the size of the expanded display to provide the enlarged image as a preview image.

In an embodiment, the instructions may cause the at least one processor to calculate a reference pixel area by each expansion size of the display and store a lookup table including the calculated reference pixel area in the memory.

In an embodiment, the instructions may cause the at least one processor to display the preview image, based on the lookup table in response to receiving a preview request.

In an embodiment, the electronic device may further include at least one first camera having a field of view different from that of the camera, and the instructions may cause the at least one processor to select a camera having a field of view corresponding to the size of the expanded display among the camera or the at least one first camera, and display the preview image by using the selected camera.

A method for operating an electronic device according to another embodiment may include, in response to detecting that a display of the electronic device is expanded from the housing, identifying the distance between a central location of the expanded display and a camera disposed in the housing, obtaining a first image including a view area of the camera, obtaining a second image obtained by correcting the first image, based on the identified distance, and displaying a preview image on the display, based on the second image.

In an embodiment, the identifying of the distance between the central location of the expanded display and the camera disposed in the housing may include identifying a horizontal distance between the camera and a horizontal central location of the expanded display when horizontal expansion of the display is detected.

In an embodiment, the obtaining of the second image may include obtaining the second image including a first area excluding an area corresponding to the identified horizontal distance from the first image, wherein the first area may be determined based on a direction of the camera moving when the display is expanded.

According to an embodiment, the displaying of the second image on the display as a preview may further include shifting the second image, based on the horizontal central location of the expanded display, and enlarging the shifted second image to a ratio corresponding to the size of the expanded display to provide the enlarged image as a preview image.

According to an embodiment, the identifying of the distance between the central location of the expanded display and the camera disposed in the housing may include identifying a vertical distance between the camera and a vertical central location of the expanded display when vertical expansion of the display is detected.

In an embodiment, the obtaining of the second image may include obtaining the second image including a second area excluding an area corresponding to the identified vertical distance from the first image, wherein the second area may be determined based on a direction of the camera moving when the display is expanded.

According to an embodiment, the displaying of the second image on the display as a preview may further include shifting the second image, based on the vertical central location of the expanded display, and enlarging the shifted second image to a ratio corresponding to the size of the expanded display to provide the enlarged image as a preview image.

According to an embodiment, the method may further include calculating a reference pixel area by each expansion size of the display- and storing a lookup table including the calculated reference pixel area.

According to an embodiment, the displaying of the preview image may include displaying the preview image, based on the lookup table in response to receiving a preview request.

According to an embodiment, the displaying of the preview image may further include selecting a camera having a field of view corresponding to the size of the expanded display among the camera or at least one first camera having a field of view different from that of the camera and displaying the preview image by using the selected camera.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing;
a camera disposed in the housing;
a display accommodatable in the housing;
at least one processor operatively connected to the camera and the display; and
a memory operatively connected to the at least one processor,
wherein the memory is configured to store instructions that, when executed, cause the at least one processor to:
in response to detecting that the display is expanded from the housing, identify a distance between a central part of the expanded display and the camera;
obtain a first image comprising a view area of the camera;
obtain a second image obtained by correcting the first image, based on the identified distance; and
display a preview image on the display, based on the second image.

2. The electronic device of claim 1, wherein the instructions cause the at least one processor to:
identify a horizontal distance between the camera and a horizontal central location of the expanded display in case that horizontal expansion of the display is detected; and
obtain the second image comprising a first area excluding an area corresponding to the identified horizontal distance from the first image, and
wherein the first area is determined based on a direction of the camera moving in case that the display is expanded.

3. The electronic device of claim 2, wherein the instructions cause the at least one processor to:
shift the second image, based on the horizontal central location of the expanded display; and
enlarge the shifted second image to a ratio corresponding to the size of the expanded display to provide the enlarged image as a preview image.

4. The electronic device of claim 1, wherein the instructions cause the at least one processor to:
identify a vertical distance between the camera and a vertical central location of the expanded display in case that vertical expansion of the display is detected; and
obtain the second image comprising a second area excluding an area corresponding to the identified vertical distance from the first image, and
wherein the second area is determined based on a direction of the camera moving in case that the display is expanded.

5. The electronic device of claim 4, wherein the instructions cause the at least one processor to:
shift the second image, based on the vertical central location of the expanded display; and
enlarge the shifted second image to a ratio corresponding to the size of the expanded display to provide the enlarged image as a preview image.

6. The electronic device of claim 1, wherein the instructions cause the at least one processor to:
calculate a reference pixel area by each expansion size of the display; and
store a lookup table comprising the calculated reference pixel area in the memory.

7. The electronic device of claim 6, wherein the instructions cause the at least one processor to display the preview image, based on the lookup table in response to receiving a preview request.

8. The electronic device of claim 1, further comprising at least one first camera having a field of view different from that of the camera,
wherein the instructions cause the at least one processor to:
select a camera having a field of view corresponding to the size of the expanded display among the camera or the at least one first camera; and
display the preview image by using the selected camera.

9. A method for operating an electronic device, the method comprising:
in response to detecting that a display of the electronic device is expanded from the housing, identifying a distance between a central location of the expanded display and a camera disposed in the housing;
obtaining a first image comprising a view area of the camera;
obtaining a second image obtained by correcting the first image, based on the identified distance; and
displaying a preview image on the display, based on the second image.

10. The method of claim 9, wherein the identifying of the distance between the central location of the expanded display and the camera disposed in the housing comprises:
identifying a horizontal distance between the camera and a horizontal central location of the expanded display in case that horizontal expansion of the display is detected; and
producing the second image comprising a first area excluding an area corresponding to the identified horizontal distance from the first image, and
wherein the first area is determined based on a direction of the camera moving in case that the display is expanded.

11. The method of claim 10, wherein the displaying of the second image on the display as a preview comprises:
shifting the second image, based on the horizontal central location of the expanded display; and
enlarging the shifted second image to a ratio corresponding to the size of the expanded display to provide the enlarged image as a preview image.

12. The method of claim 9, wherein the identifying of the distance between the central location of the expanded display and the camera disposed in the housing comprises:
identifying a vertical distance between the camera and a vertical central location of the expanded display in case that vertical expansion of the display is detected; and
producing the second image comprising a second area excluding an area corresponding to the identified vertical distance from the first image, and
wherein the second area is determined based on a direction of the camera moving in case that the display is expanded.

13. The method of claim 12, wherein the displaying of the second image on the display as a preview comprises:
shifting the second image, based on the vertical central location of the expanded display; and
enlarging the shifted second image to a ratio corresponding to the size of the expanded display to provide the enlarged image as a preview image.

14. The method of claim 9, further comprising:
calculating a reference pixel area by each expansion size of the display;
storing a lookup table comprising the calculated reference pixel area; and
providing the preview image, based on the lookup table in response to receiving a preview request.

15. The method of claim 9, wherein the displaying of the preview image further comprises:
selecting a camera having a field of view corresponding to the size of the expanded display among the camera or at least one first camera having a field of view different from that of the camera; and
providing the preview image by using the selected camera.
